# EUROPEAN PATENT APPLICATION

(11) **EP 4 678 443 A1**
(43) Date of publication of application: **14.01.2026**
(21) Application number: 25184493.2
(22) Date of filing: 23.06.2025
(51) Int. Cl.: B60K 17/02, B60K 1/02, B60K 17/08, F16H 3/00, F16H 48/20

(54) **ELECTRIC AXLE FOR INDUSTRIAL OR COMMERCIAL VEHICLE**

(30) Priority: 09.07.2024 IT 202400015760
(71) Applicant: FPT Industrial S.p.A., 10156 Torino (IT)
(72) Inventor: PESOLA, Fabio, 10156 Torino (IT); CANTONE, Francesco, 10156 Torino (IT); ESPOSITO, Pietro, 10156 Torino (IT); TESSITORE, Marco, 10156 Torino (IT); FEOLA, Domenico, 10156 Torino (IT); DI MONACO, Francesco, 10156 Torino (IT)
(74) Representative: Fiume, Orazio

(57) **Abstract**

Electric axle for industrial or commercial vehicle comprising a differential (DF) equipped with an input port (K) and shafts for rotating an equal number of vehicle wheels (W), a first electric motor (E-motor 1) having a drive shaft on which a first pinion (P1) is keyed to transmit the motion to the input port (K) of the differential via at least one transmission (DL1) comprising, a first intermediate shaft (X1) is defined by a first group (G1) comprising an epicyclic gear train (EAX), a first transmission wheel (R1) configured to mesh with said first pinion (P1) in which the first transmission wheel (R1) defines a lying plane (LP) in which the first electric motor (E-motor 1) is arranged in a position opposite to the epicyclic gear train (EAX) with respect to the lying plane (LP).

## Description

### Field of the invention

The present invention relates to the field of electric propulsion systems, in particular in the field of industrial and commercial vehicles.

The electric axle of the present invention belongs to that category of axles called off-axis, since the rotation axis of the at least one electric motor is parallel but not coaxial with the semi-axles that define the axle.

### State of the art

In the field of commercial and industrial vehicles, a massive electrification is underway that sees the replacement of internal combustion engines or their addition with electric motors.

Industrial and commercial vehicles are designed to maximize cargo space, therefore, one of the fundamental aspects concerns the creation of compact as well as robust axles. Furthermore, it must be considered that these vehicles require significant torques/powers and to achieve such torques/powers it is necessary to provide transmissions that guarantee a significant transmission ratio or the use of two electric machines.

It is therefore not easy to balance compactness and a high transmission ratio or the arrangement of two electric machines and the transmission with respect to vehicle constraints.

### Summary of the invention

The purpose of this invention is to present an electric axle for industrial or commercial vehicles that is particularly compact but capable of ensuring a high transmission ratio. The basic idea of the present invention is to connect the pinion of an electric motor to the input port of an axle differential by means of at least one intermediate shaft defined by
- a first group defined by:
   + a planetary gearset,
   + a first drive wheel configured to mesh with said pinion and operatively connected to an input port of the planetary gearset by means of a first hollow shaft,
- a second group comprising
   + a second shaft coaxial with said first shaft, operatively connectable to an output port of the planetary gearset,
   + a second drive wheel, keyed to a third shaft, coaxial with the planetary gearset, meshing with the crown of the axle differential, wherein the third shaft is operatively connectable to the second shaft.

In a common lying plane lie said pinion and said first transmission wheel, and in which the electric motor is arranged in a position opposite to the epicyclic gear train with respect to the common lying plane.

Preferably, the differential is arranged in accordance with the electric motor with respect to the common lying plane.

Advantageously, the first gear wheel has a larger diameter than the pinion allowing to obtain a first reduction of the transmission ratio, furthermore, since the electric motor and the differential are arranged in a common half-space identified by the aforementioned common lying plane, the diameter of the first wheel, as well as the diameter of the fixed crown of the epicyclic gear train depends on the radial dimensions of the electric motor and the differential.

The dependent claims describe preferred variants of the invention, forming an integral part of the present description.

### Brief description of the figures

Further objects and advantages of the present invention will be made clear from the following detailed description of an embodiment thereof (and variations thereof) and from the accompanying drawings given purely for explanatory and non-limiting purposes, in which:
Figure 1 shows an example of a propulsion scheme based on the transmission relating to a first electric motor and an optional transmission relating to an optional second electric motor;
Figures 5a and 5b show variations relating to the transmission of the first electric motor of Figure 1;

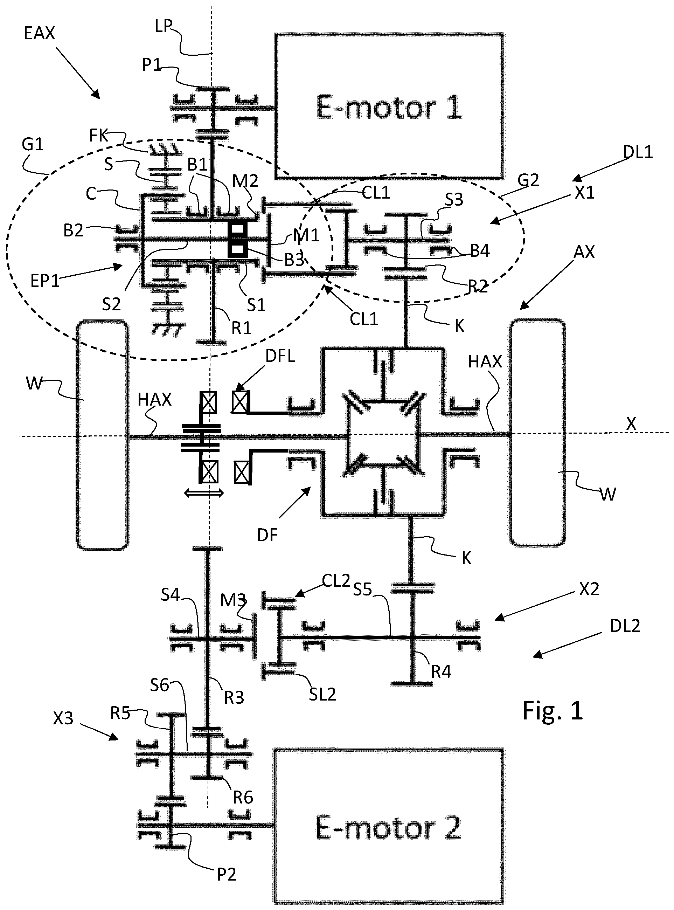

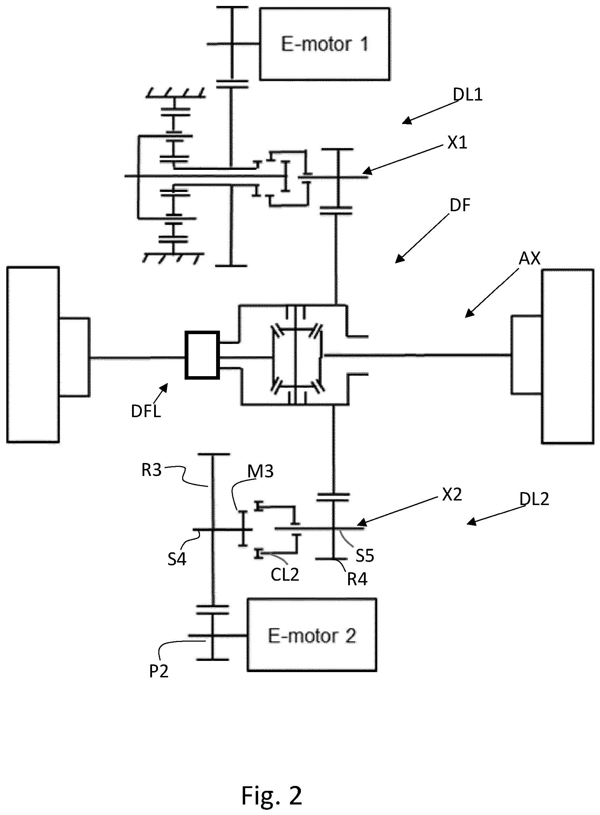

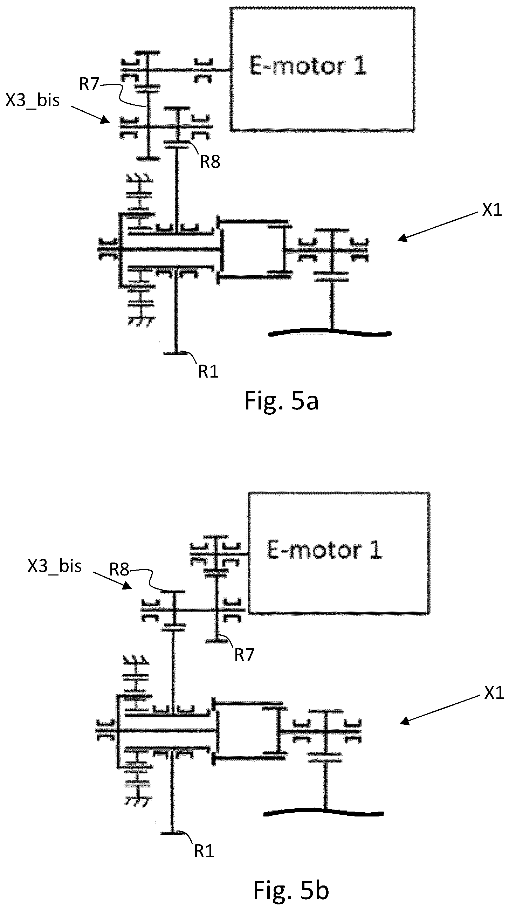

Figures 2 - 4 show further variations of a propulsion scheme, based on the transmission of Figures 1, 5a and 5b, in which further examples of transmissions relating to the optional second electric motor are shown.

The same reference numbers and letters in the figures identify the same elements or components or functions.

It should also be noted that the terms "first", "second", "third", "upper", "lower" and the like may be used herein to distinguish various elements. These terms do not imply a spatial, sequential or hierarchical order for the modified elements unless specifically indicated or inferred from the text.

The elements and features illustrated in the various preferred embodiments, including the drawings, may be combined with each other without departing from the scope of protection of this application as described below.

### Detailed description of example embodiments

Figures 1 - 4 show four different variants of the electric axle object of the present invention.

In all the variants a first electric machine E-motor 1 and a second electric machine E-motor 2 are shown, however only the first electric machine is essential, while the second with a relative transmission connecting to the axle is completely optional.

In the following, the term "motor" means an electric machine capable of generating driving torque or resistant torque when it functions respectively as a motor or generator.

The solution shown here refers to a configuration called off-axes since the shaft of the electric motor is parallel but not coaxial with the axle AX schematically identified on the X axis.

The vehicle axle includes at least one right wheel and one left wheel W and a differential DF. The differential, as is known, comprises a crown K, defining the input port, and two output ports coinciding with the half-axles HAX that connect the wheels W. The crown is integral in rotation with the differential satellite carrier, via the differential box itself.

In the following, the term "wheel" is used, meaning "toothed wheel", having the task of transferring the rotational motion from one shaft to another transmission shaft.

The first electric motor E-motor 1 comprises a relative first pinion P1, keyed to a relative drive shaft, which transmits the motion to the input port K of the differential via an intermediate shaft X1.

The intermediate shaft X1 is defined by
+ a first group G1 comprising:
   - an epicyclic gear train EAX preferably with parallel axes,
   - a first transmission wheel R1 configured to mesh with said first pinion P1 and operationally connected, and preferably coaxial, with the sun gear of the epicyclic gear train by means of a first hollow shaft S1,
   - a second shaft S2 coaxial and internal to said first shaft S1, operationally connected to the satellite carrier C defining the output port of the epicyclic gear train,
   - a second transmission wheel R2, keyed to a third shaft S3, coaxial with the epicyclic gear train, meshing with the crown K of the axle differential, in which the third shaft is operationally connectable to the second shaft.

The first pinion P1 and the first transmission wheel R1 lie in a common lying plane LP. The first electric motor E-motor 1 is arranged in a position opposite to the epicyclic gearing EAX with respect to the common bearing plane LP. According to the present invention, the axis identified by the electric machine, the axis identified by the at least one intermediate shaft and the axle Ax are all mutually parallel.

The solution object of the present invention, maintaining the epicyclic gearing staggered with respect to the body of the electric machine and the differential, allows obtaining an optimal radial packing with respect to the X axis of the entire architecture and components.

The epicyclic gearing can be simple with a fixed crown with a fixed point of the transmission, or compound, i.e. with multiple epicyclic gearings in series, or "stepped" or "compound" as the solutions are usually called in which a satellite has two wheels constrained to each other in rotation, and the gearing has an input sun gear and a fixed crown with a fixed point of the transmission.

Preferably, the input port of the epicyclic gear train coincides with the relative sun gear, while the output port of the epicyclic gear train coincides with the relative satellite carrier C.

The third shaft S3 is preferably connectable to the second shaft S2 by means of a clutch or clutch CL1, preferably of the absolute synchronized type or of the quick clutch type, frontal or radial.

More preferably, said connection is made by means of a selection device CL1 capable of engaging alternatively
- the hub M1 integral in rotation with the satellite carrier C by means of the second shaft S2, or
- the hub M2 integral in rotation with the wheel R2 by means of the first shaft S1.

The device CL1, comprises a sliding sleeve, constantly engaged on the shaft S3, which defines a three-position engagement system and therefore creates a two-speed gear shift system with a central disconnection or neutral position.

Advantageously, it is possible to realize at least three configurations in which the motion generated by the first electric motor reaches the wheel R2, through the direct connection of the shafts S1 and S3 or S2-S3. Alternatively, the electric motor is disconnected from the differential by disconnecting the sleeve CL1 from both the hub M1 and the hub M2.

It is quite evident that when a CL1 clutch is implemented capable of alternatively engaging one of the two hubs M1 and M2**,** then, the wheel R1 is arranged substantially in an intermediate position between the sun gear of the EAX gear train and the hub M1. Preferably, a pair of support bearings B1 is implemented, fitted externally to the shaft S1 and arranged on the opposite sides of the wheel R1, ensuring optimal support of the shaft S1.

The shaft S2 is then supported by a bearing B2 that insists on the satellite carrier and by a bearing B3 intermediate between the hollow shaft S1 and the shaft S2**.** The S3 shaft is supported by a further pair of bearings B4, different and separate from the bearings supporting the S1 and S2 shafts and preferably arranged on opposite sides of the R2 wheel.

The sleeve CL1 preferably includes electric or hydraulic or pneumatic actuation means to achieve the configurations described above.

The intermediate shaft X1, therefore, can ideally be seen as the sum of the shafts
(S1 OR S2) AND S3.

Where, S1 and S2 are part of the first group G1 and S3 is part of the second group G2.

In the following, the symbol DL1 indicates the first transmission relating to the first electric motor E-motor 1.

As can be seen from any of the attached figures, the first wheel R1 with the pinion P1 lie in a lying plane LP which evidently identifies two semi-spaces. In the sheet this plane LP identifies two semi-planes. In the left semi-plane of the sheet the epicyclic gearing EAX is arranged, while in the right semi-plane of the sheet the first motor E-motor 1 is arranged and more preferably also the differential DF, which therefore is not in a medial position of the axle AX.

This solution, therefore, allows the creation of a compact electric axle both in the axial direction, i.e. along the X axis defined by the axle AX, and in the transverse/radial direction to the axial direction.

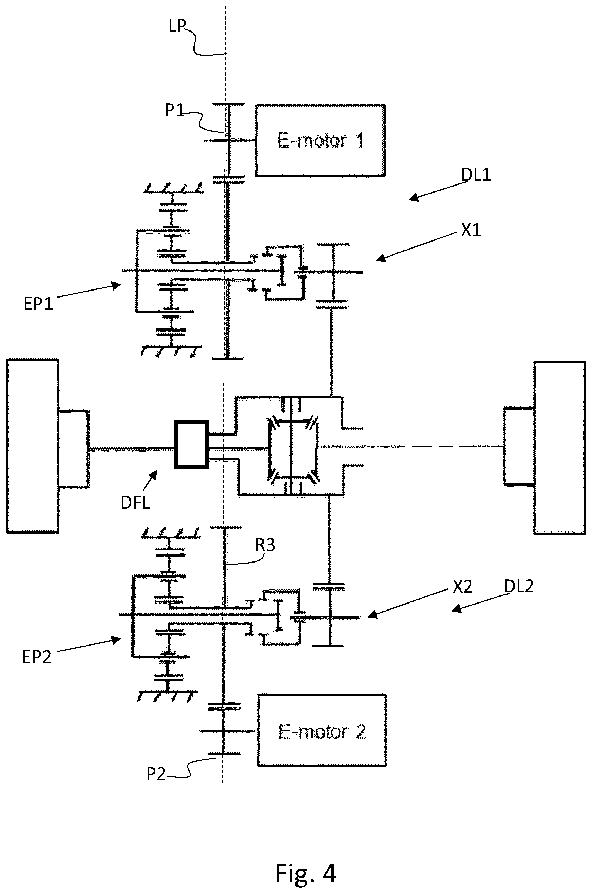

According to further preferred variants of the invention, the differential DF is associated with an additional electric motor by means of a relative transmission DL2. Figure 4 shows a solution in which the second electric motor E-motor 2 is operationally associated with the differential by means of a transmission identical to the transmission of the first electric motor.

Preferably, the first pinion P1, of the first electric motor, and the second pinion P2, of the second electric motor lie on the same lying plane LP.

Figures 1 - 3, unlike figure 4, show solutions in which the second electric motor is operationally associated with the differential by means of a different transmission DL2 with respect to the transmission DL1 relating to the first electric motor.

Figure 2 shows the simplest solution among those in figures 1 - 3, as the first transmission DL1 relating to the first motor E-motor1 is able to define two different reduction gears by means of the clutch CL1, and the second transmission DL2 relating to the second electric motor E-motor2 has only one reduction gear.

The second pinion P2 of the second electric motor E-motor 2 meshes with a third input wheel R3 of the second transmission DL2, integral with a fourth shaft S4 coaxial with a fifth shaft S5 that supports the output wheel R4 of the second transmission, which meshes with the crown K of the differential DF. It is clear that the terms "input" and "output" are to be considered as labels and not as functional characteristics, as the torque can pass from the electric motor to the wheels in the case of propulsion or from the wheels to the electric motor in the case of regenerative braking.

In the context of this description, if it is stated that "a shaft supports a wheel" or "a shaft is equipped with a wheel" or "a wheel/pinion is keyed to a shaft" it is understood, unless otherwise specified, that the two components are fixed to each other.

The S4 and S5 shafts are coaxial to each other and can be connected by means of an additional clutch or CL2 clutch. For example, the CL2 clutch comprises a sliding sleeve similar to the CL1 sliding sleeve described above, determining in one condition the interconnection of the shafts S4 and S5 and in another condition the mechanical separation, neutral, of the same shafts allowing the disconnection of the second electric machine with respect to the differential DF and therefore with respect to the wheels W.

In relation to the most favourable transmission ratio, the first electric machine or the second electric machine or both can be kept operational, as both the CL1 and CL2 clutches are able to perform the connection and disconnection of the respective electric machines with respect to the differential DF and therefore with respect to the wheels W.

The diameter of the wheel R3 can be equal to or different from the diameter of the wheel R1. Just as the diameter of the wheel R4 can be equal to or different from the diameter of the wheel R2.

Preferably, the diameters of the wheels R3 and R4 are different from the diameter of the wheels R1 and R2 respectively, so as to obtain different transmission ratios between the first and the second electric motor with respect to the differential ring K.

Advantageously, the gear shift conditions of the first transmission are different from the gear shift conditions (if possible) of the second transmission: this allows the so-called "torque filling" to be achieved during the gear shift of the first transmission or the second transmission, ensuring propulsion even during gear shifts.

The solution in figure 1 differs from the solution in figure 2 due to the presence of a second intermediate shaft X3 which defines a further "drop" or "jump".

The second intermediate shaft X3 includes a fifth wheel R5 meshing with the second pinion P2 of the second electric motor E-motor 2 and a sixth wheel R6 meshing with the third input wheel R3 of the second intermediate shaft X2. This solution therefore allows for an increase in the total transmission ratio between the pinion P2 and the wheel R3 and consequently an increase in the driving torque at the expense of the final rotation speed at the crown K.

Also in this case, the first intermediate shaft X2 of the second transmission includes a clutch or clutch CL2.

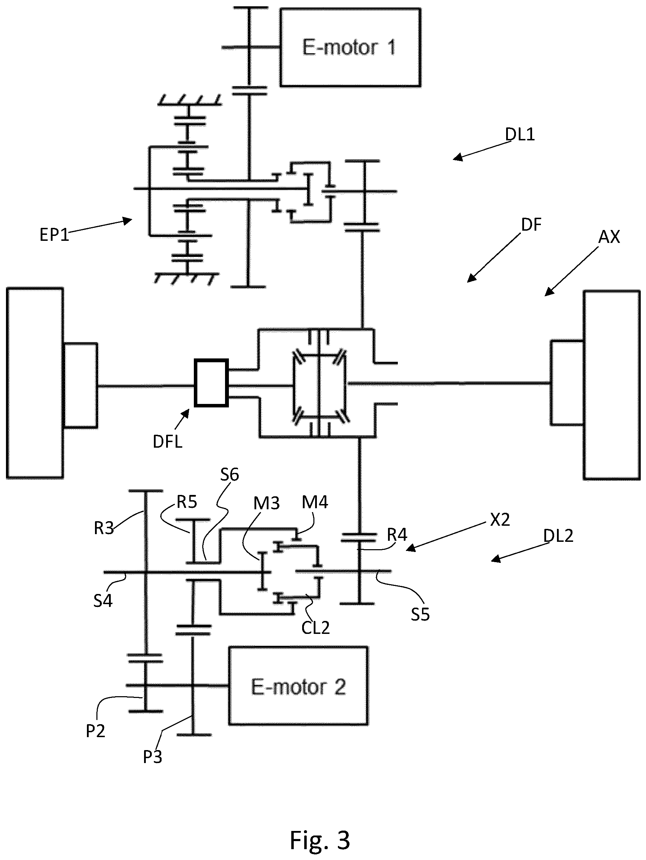

The solution in figure 3, which shows two gears for each of the two transmissions DL1, DL2, differs from those in the previous figures in that the second transmission DL2 relating to the second electric motor E-motor 2 includes two gears.

A first P2 and a second pinion P3 are keyed to the shaft of the second electric motor.

The first pinion P2 meshes with the third wheel R3 similarly to the solution in figure 2. However, the transmission further comprises a fifth gear wheel R5 keyed to a hollow shaft S6 and coaxial with the shaft S4. The fifth gear wheel R5 meshes with the second pinion P3 of the second electric motor E-motor 2.

An additional hub M4 is keyed to the hollow shaft S6 and in this case the sliding sleeve of the CL2 clutch is arranged to alternatively engage the hub M3 integral in rotation with the wheel R3, on the shaft S4, and the hub M4 integral in rotation with the hollow shaft S6 and therefore with the wheel R5.

In figure 3, the M4 hub is proposed with internal teeth, while the M3 hub maintains the configuration with external teeth as in the case of figure 2. Therefore, the sliding sleeve of the CL2 clutch, in this example, must include an internal toothing complementary to the M3 hub and an external toothing complementary to the M4 hub.

Preferably, the CL2 clutch is also suitable for completely disconnecting the second electric motor from the DF differential, assuming a neutral configuration of the second transmission.

In general, when there is a second electric motor with a relative transmission, it is preferable that the CL1 clutch is also able to assume the neutral configuration in order to disconnect the first electric motor from the DF differential.

It is worth highlighting that both the transmissions of the first and second electric motor are interfaced with the same crown K of the differential.

In all variants where the second electric motor E-motor 2 is provided, the latter is arranged in concordance with the differential and the first electric motor with respect to the PL lying plane, improving the overall dimensions of the electric axle.

All the solutions in figures 1 - 4 also provide a DFL differential lock device. This is preferably achieved by means of a sliding sleeve capable of making one of the half-shafts integral in rotation with the satellite carrier/differential box, i.e. with the crown K of the same.

It is preferably arranged near the LP lying plane. This configuration guarantees optimal compaction of the electric axle, which can be pushed up to the limits of the reciprocal radial distance between the wheel R1, and possibly R5, and the DFL differential lock system itself. All the solutions relating to the second transmission provide for the implementation of at least one intermediate shaft X2. While according to figure 1, the second transmission implements two intermediate shafts X2 and X3. It is worth highlighting that the so-called "drop" or "jump" created by the set of shafts X2 and X3 shown in figure 1 in relation to the second transmission, can be implemented in any of the solutions in figures 1 - 4 in relation to the first transmission DL1, as shown, for example, in figures 5a and 5b.

Advantageously, the introduction of the drops in figures 5a and 5b allows to limit the size of the wheels R1 in the first transmission and R5 in the second transmission, with the same output ratio between the pinions of the electric machines and the wheels themselves R1 and R5, in order to be able to further compact the transverse extension, to the x-axis, of the electric axle, thus being able to bring the axles X1 and X2 closer to the differential DF and its locking system DFL.

In figures 5a and 5b the drop between the pinion P1 of the crankshaft and the input wheel R1 of the intermediate shaft X1 is achieved by the shaft X3_bis which includes a seventh wheel R7 meshing with the pinion P1 and an eighth wheel R8 meshing with the first wheel R1.

Comparing figures 5a and 5b, it can be noted that they differ in the mutual position of wheels R7 and R8. In particular, in relation to the diameter of wheel R1 to maximize packing.

In case of simultaneous operation, the two electric machines can work by selecting the maximum available ratio through the gears on which they insist, allowing high-torque starting functions from a standstill capable of satisfying the needs of the vehicle at full load on a ramp. Another function that can be implemented is that of possible propulsion by only one of the two electric machines, for example in highway conditions of high speed and low torque required for the vehicle to advance. The combination of these operating modes therefore allows the maximization of the energy efficiency of the propulsion system, being able to vary its configuration of the electric machines involved and their transmission ratios. This disconnection condition also allows vehicle propulsion with only one of the two electric machines, for example in the event of failure of the other, ensuring operational redundancy. Advantageously, the present invention also finds application in rescue vehicles.

The disconnection of both transmissions from the electric machines finally allows easy towing of the vehicle in the event of a breakdown.

Implementation variants to the non-limiting example described are possible, without however departing from the scope of protection of the present invention, including all the equivalent embodiments for a technician in the field, to the content of the claims.

From the description reported above, the technician in the field is able to realize the object of the invention without introducing further construction details.

### Legend:

| | |
|---|---|
| wheels | W |
| half-axles | HAX |
| axle | AX |
| development axis of the axle | X |
| differential | DF |
| differential lock | DFL |
| differential ring gear | K E- |
| First electric machine | motor1 E- |
| Second electric machine | motor2 |
| First transmission | DL1 |
| Second transmission | DL2 |
| First pinion of E-motor1 | P1 |
| Second pinion of E-motor2 | P2 |
| Third pinion of E-motor2 | P3 |
| First intermediate shaft | X1 |
| Second intermediate shaft | X2 |
| Additional idler and reduction shaft | X3 |
| idler and reduction | X3_bis |
| First group | G1 |
| Second group | G2 |
| epicyclic gearing | EAX |
| First drive wheel | R1 |
| Second drive wheel | R2 |
| Third drive wheel | R3 |
| Fourth drive wheel | R4 |
| Fifth drive wheel | R5 |
| Sixth drive wheel | R6 |
| Seventh drive wheel | R7 |
| Eighth drive wheel | R8 |
| First shaft | S1 |
| Second shaft | S2 |
| Third shaft | S3 |
| Fourth shaft | S4 |
| Fifth shaft | S5 |
| Sixth shaft | S6 |
| lying plane | LP |
| Epicycle gear satellite carrier | C |
| first clutch | CL1 |
| Second clutch | CL2 |
| First hub | M1 |
| Second hub | M2 |
| Third hub | M3 |
| Fourth hub | M4 |

## Claims

1. Electric axle for industrial or commercial vehicle comprising
- a differential (DF) equipped with an input port (K) and shafts to drive in rotation an equal number of vehicle wheels (W),
- a first electric motor (E-motor 1) having a drive shaft on which a first pinion (P1) is keyed to transmit the motion to the input port (K) of the differential via at least one transmission (DL1) comprising a first intermediate shaft (X1) defined by
+ a first group (G1) comprising:
- an epicyclic gear train (EAX),
- a first transmission wheel (R1) which meshes with said first pinion (P1) and is operatively connected to an input port of the epicyclic gear train by means of a first hollow shaft (S1),
- a second shaft (S2) coaxial with said first shaft (S1), operatively connected to an output port of the epicyclic gear train,
+ a second group (G2) comprising:
- a second drive wheel (R2), keyed to a third shaft (S3), coaxial with the epicyclic gear train, which meshes with said input port (K),
wherein the third shaft is operably connectable to the second shaft (S2) by means of a first clutch (CL1),
wherein the first drive wheel (R1) defines a lying plane (LP) and wherein the first electric motor (E-motor 1) is arranged in a position opposite to the epicyclic gear train (EAX) with respect to the lying plane (LP).

2. Axle according to claim 1, wherein the differential is arranged in accordance with the first electric motor with respect to the lying plane (LP).

3. Axle according to claim 1, wherein said clutch (CL1) is adapted to connect operatively and alternatively the second wheel (R2) with said output port of the epicyclic gear train and with said first wheel (R1) defining a two-speed gearbox.

4. Axle according to claim 3, wherein said clutch is adapted to define a condition of disconnection of the second wheel (R2) from said first electric motor (E-motor 1).

5. Axle according to claim 3 or 4, wherein the clutch (CL1) is positioned close to the first electric motor in a direction radial to the drive shaft of the first electric motor.

6. Axle according to claim 5, wherein said clutch (CL1) is arranged between the first electric motor and the differential (DF).

7. Axle according to any of claims 2 - 6, wherein said second shaft (S2) supports at a first end a planet carrier (C) of the epicyclic gear train and at a second end, opposite to the first one, a first hub (M1) operably connectable to said first clutch (CL1).

8. Axle according to any of claims 2 or 7, wherein said first hollow shaft (S1) supports at a first end a sun gear of the epicyclic gear train and wherein said first transmission wheel (R1) is arranged in an intermediate and coaxial position between the sun gear of the epicyclic gear train and the second hub (M2) of the first shaft (S1).

9. Axle according to claim 8, wherein said first hollow shaft (S1) supports at a second end opposite to the first end a second hub (M2) and wherein said first clutch (CL1) comprises a sliding sleeve capable of engaging alternatively on said second hub (M2) and said first hub (M1) or capable of remaining disconnected from both the first and second hubs (M1 and M2).

10. Axle according to any of the preceding claims, wherein said lying plane is common to said first wheel (R1) and said pinion (P1) of the electric motor.

11. Axle according to any of the preceding claims 1 - 9, wherein said first transmission (DL1) further comprises a return and reduction shaft (X3_bis), arranged between the electric motor and the first intermediate shaft (X1).

12. An axle according to any of the preceding claims 1 - 11, further comprising a second electric motor (E-motor 2) comprising a second pinion (P2) driving in rotation the input port (K) of the differential by means of a respective second transmission (DL2).

13. Axle according to claim 12, wherein said second transmission comprises a second intermediate shaft (X2) identical to the first intermediate shaft (X1).

14. Axle according to claim 12, wherein said second transmission comprises a second intermediate shaft (X2) comprising
- a fourth shaft (S4) on which a third wheel (R3) is keyed which meshes with said second pinion (P2) and a third hub (M3) and
- a fifth shaft (S5) coaxial with the fourth shaft equipped with a fourth wheel (R4) which meshes with the input port (K) of the differential and a second clutch (CL2) which selectively connects in rotation the fifth shaft (S5) with the third hub (M3).

15. Axle according to claim 12, wherein said second transmission comprises a second intermediate shaft (X2) and a further return and reduction shaft (X3), wherein the second intermediate shaft (X2) comprises
- a fourth shaft (S4) on which a third wheel (R3) is keyed which meshes with a sixth wheel (R6) of the further return and reduction shaft (X3) and a third hub (M3) and
- a fifth shaft (S5) coaxial with the fourth shaft (S4) equipped with a fourth wheel (R4) which meshes with said input port (K) of the differential and a second clutch (CL2) arranged to selectively connect in rotation the fifth shaft (S5) with the third hub (M3) of the fourth shaft (S4),
and wherein the further return and reduction shaft (X3) comprises a sixth shaft (S6) stably supporting said sixth wheel (R6) and a fifth wheel (R5) which meshes with said second pinion (P2).

16. Axle according to one of claims 14 or 15, wherein said second electric motor comprises said second pinion (P2) and a third pinion (P3) keyed to the relative drive shaft and wherein said second intermediate shaft (X2) comprises
- a fourth shaft (S4) supporting a third wheel (R3) that meshes with said second pinion (P2) and a third hub (M3) operatively connected to the fourth shaft (S4),
- a sixth shaft (S6), hollow and coaxial with the fourth shaft (S4), supporting a fifth wheel (R5) that meshes with the third pinion (P3) and operatively connected to a fourth hub (M4),
- a fifth shaft (S5) coaxial with said fourth and sixth shafts, supporting said fourth wheel (R4) and said second clutch (CL2), configured to alternatively engage the third or fourth hub or to create a neutral configuration.

17. Axle according to any of the preceding claims, wherein the differential is provided with a locking device (DFL), preferably housed in correspondence with said lying plane.
